# EUROPEAN PATENT APPLICATION

(11) **EP 0 937 494 A2**
(43) Date of publication of application: **25.08.1999**
(21) Application number: 99103188.1
(22) Date of filing: 18.02.1999
(51) Int. Cl.: B01D 63/08, B01D 65/00, B01D 65/02, C02F 3/12, C02F 1/44

(54) **Membrane separation system**

(30) Priority: 23.02.1998 JP 3946798
(71) Applicant: Kubota Corporation, Naniwa-ku, Osaka (JP)
(72) Inventor: Yarnada, Yutaka, Naniwa-ku, Osaka (JP); Izumi, Kiyoshi, Naniwa-ku, Osaka (JP); Sakai, Hidehiko, Chuo-ku, Tokyo (JP); Nurishi, Masaharu, Naniwa-ku, Osaka (JP)
(74) Representative: Vonnemann, Gerhard, Dr.-Ing.

(57) **Abstract**

This invention provides a membrane separation system which offers easy installation and maintenance when applied to a large-scale sewage treatment tank, particularly. The membrane separation system includes one or more filter membrane module(s) immersed in a mixture to be filtered; one or more aeration diffuser(s) disposed below the filter membrane module(s); and a diffuser case with its upper and bottom open, containing the aeration diffuser(s) and bearing the filter membrane module(s) to guide aerated bubbles from the aeration diffuser(s) upward to the filter membrane module(s). The filter membrane module has an arrangement wherein plate-like filter membrane cartridges, each have its supporting plate surfaces covered with filter membranes, are arranged in vertical orientation with the filter membranes, in parallel and spaced relation, sequentially in the longitudinal direction of the treatment tank. Thereby upper end portions of the filter membrane cartridges, which ranging in the longitudinal direction of the treatment tank, define a maintenance passage for the filter membrane cartridges themselves.

## Description

### FIELD OF THE INVENTION

The present invention relates generally to a membrane separation system used for sewage treatment, sludge condensation and the like.

### BACKGROUND OF THE INVENTION

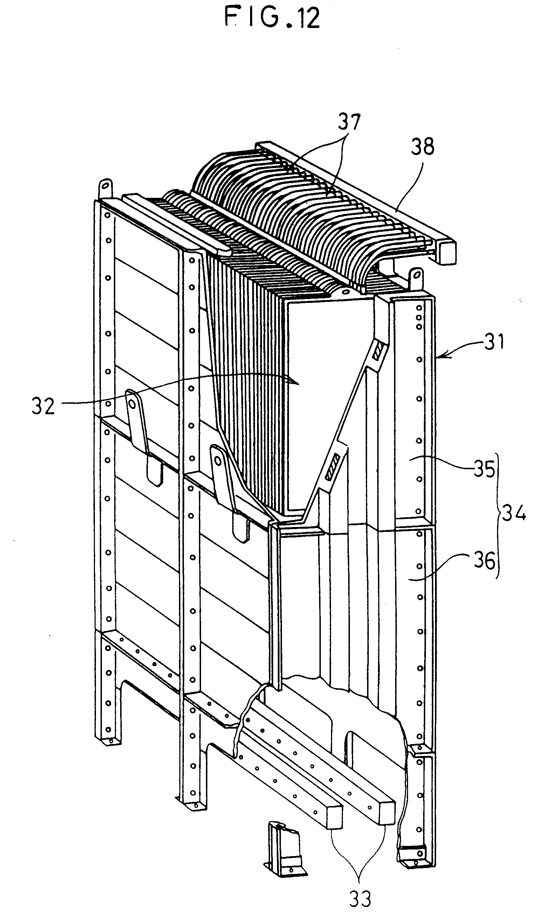

As the solid/liquid separators used for sewage treatment, sludge condensation and the like, there has been known a membrane separation system 31 immersed in a mixture to be filtered, as shown in Fig.12. The membrane separation system 31 includes a plurality of plate-like filter membrane cartridges 32 and an aeration diffuser 33 disposed below the filter membrane cartridges 32 for feeding aeration gas to clean the film surfaces. The filter membrane cartridges 32 and the aeration diffuser 33 are contained in a case 34, and the case 34 is divided into a cartridge case 35 accommodating the filter membrane cartridges 32 and a diffuser case 36 accommodating the aeration diffuser 33 in order to facilitate the transportation and maintenance of the system. To each filtration membrane cartridge 32 is connected a tube 37 in its one end, with its other end connected to a collector pipe 38 mounted to the cartridge case 35.

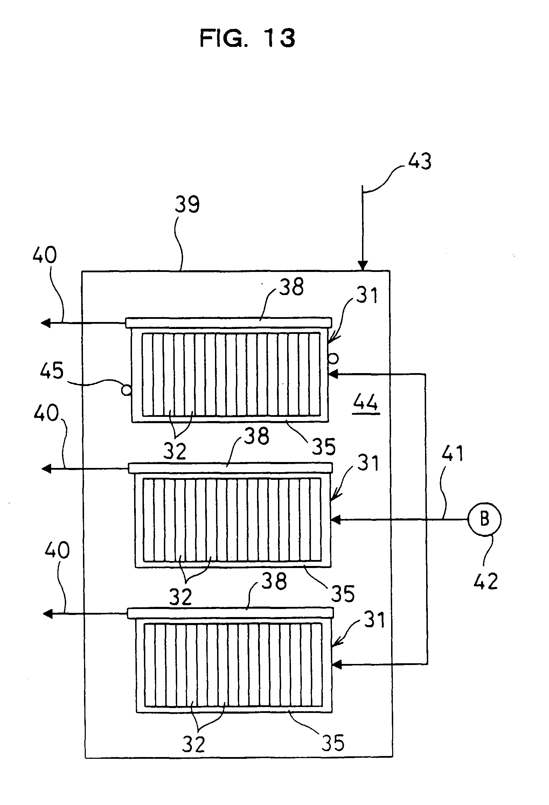

In an activated sludge process facility or the like, as seen in Fig.13, the membrane separation systems 31 are disposed in parallel and spaced relation in a treatment tank 39 and are provided with filtrate conduits 40 connected to the respective collector pipes 38 thereof, and with an air supplier such as a blower 42 and an air conduit 41 connected to the respective aeration diffusers 33 thereof.

A raw water 43 and an activated sludge are introduced into the treatment tank 39 so that the membrane separation systems 31 are immersed in an activated sludge mixture 44. Subsequently, the activated sludge process is carried out with the raw water 43 continuously fed thereto and with the aeration diffusers 33 bubbling air . At the same time, the mixture 44 is filtered utilizing its head above the filtration membrane cartridges 32 (suction filtration under reduced pressure may also be implemented by interposing a suction pump in the filtrate conduits 40), resulting filtrate is taken out through the filtrate conduits 40.

In this process, air bubbles from the aeration diffusers 33 together with an upward flow of the mixture 44 produced by the bubbles serve to clean the surfaces of the filter membrane cartridges 32 thereby preventing the reduction of separation performance of the filter membrane cartridges 32 and also keeping the mixture 44 flowing agitated.

It has been generally known that membrane separation systems serve as more efficient solid/liquid separating means than settling tanks, particularly in the aforementioned activated sludge process facilities. Among others, membrane separation systems of the type to be immersed in a subject mixture to be filtered permit the activated sludge to be held in the tank, thus contributing to an increased efficiency of biological treatment. The increased treatment efficiency permits the reduction of the footprint for the treatment tank compared to that for the conventional treatment tank and provides a compact treatment facility with the aid of the elimination of the settling tank.

Particularly, the membrane separation system 31 of the type sown in Figs.12 and 13 presents an excellent performance in filtering high concentration activated sludge mixture. Accordingly, this separation system features a footprint for the treatment tank of about 1/3 as small as that with the conventional separation system, easy operation and maintenance work, and much less costs than the other membrane separation systems.

Accordingly, the membrane separation system 31 has been employed in many of the waste water treatment facilities such as public septic tanks for domestic sewage and industrial waste water treatment facilities that have capacities of not more than 1000 m³/day. The application of this membrane separation system will be extended to the domestic septic tanks in near future.

However, as to large-scale waste water treatment facilities such as sewage disposal plant with capacities of not less than tens of thousands tons per day, the application of the membrane separation system 31 is sometimes excluded from consideration because the settling tanks surpass the membrane separation systems in terms of costs. That is, construction/system costs per unit volume of the waste water to be treated with the settling tank is progressively reduced as the waste water volume increases, whereas that with the membrane separation systems is constant irrespective of the waste water volume.

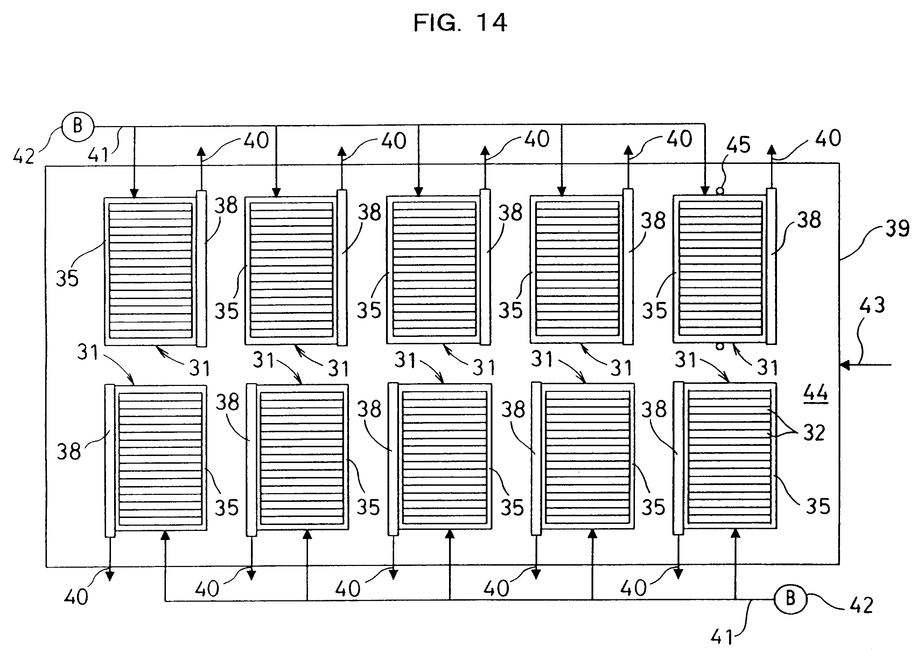

In practice, the membrane separation system 31 is designed to load or remove the filter membrane cartridges 32 on a cartridge case 35 basis for the aid of facilitating the control- maintenance/inspection of the system. Hence, the cartridge case has its size limited up to 750×2550×2550 mm for accommodating an array of about 150 filter membrane cartridges 32 in spaced and parallel relation, as mentioned above, and is provided with a pair of guide rails 45 for guiding vertical movements of the cartridge case 35 (for simplicity of the illustration, Fig.13 only depicts the guide rails in conjunction with the uppermost separation system 31). For adapting larger volume of waste water, however, the membrane separation systems 31 must be arranged in parallel and in plural lines, as shown in Fig.14. This results in cumbersome removal or loading of the cartridge case 35.

### DISCLOSURE OF THE INVENTION

In view of the foregoing, it is an object of the present invention to provide a membrane separation system which offers easy maintenance/inspection even in the large-scale treatment tanks and which accomplishes system/construction costs comparable to the settling tanks.

For achieving the above object, the invention provides a membrane separation system laid to be immersed in a mixture to be filtered in a treatment tank comprising:
one or more filter membrane module(s) disposed in a longitudinal direction of the treatment tank;
one or more aeration diffuser(s) disposed below the filter membrane module(s); and
a diffuser case with its upper and bottom open, containing the aeration diffuser(s) and bearing the filter membrane module(s) to guide aerated bubbles from the aeration diffuser(s) upward to the filter membrane module(s),
each of the filter membrane module having plate-like filter membrane cartridges, and the filter membrane cartridges each having its supporting plate surfaces covered with filter membranes of organic materials and arranged in vertical orientation with the filter membranes, in parallel and spaced relation, sequentially in the longitudinal direction of the treatment tank,
upper end portions of the filter membrane cartridges ranging in the longitudinal direction of the treatment tank to define a maintenance passage for the filter membrane cartridges themselves.

The filter membrane module may comprises a cartridge case having vertical slits on its inside surfaces for receiving the lateral edges of the filter membrane cartridges, and is disposed singly or in plural numbers to cover the upper opening of the diffuser case.

Alternatively, the filter membrane module may comprises a pair of cartridge supporting panels fixed on upper inside surfaces of the diffuser case in opposing relation, and each of the cartridge supporting panel having vertical slits on its surfaces for receiving the lateral edges of the filter membrane cartridges.

At least a part of the diffuser case may be integrally constructed with the treatment tank in civil engineering fashion.

### DESCRIPTION OF THE DRAWINGS

Fig.1 is a plan view showing membrane separation systems according to a first embodiment of the invention contained in a treatment tank;
Fig.2 is a sectional view of the membrane separation system and treatment tank taken on line A-A in Fig.1;
Fig.3 is a sectional view of the membrane separation systems and the treatment tank taken on line B-B in Fig.1;
Fig.4a is a plan view showing a slit panel as a component of a cartridge case of the membrane separation system whereas Fig.4b is a vertical sectional view showing the slit panel;
Fig.5a is a plan view showing a filter membrane cartridge as a component of the membrane separation system shown in Fig.1 whereas Fig.5b is a vertical sectional view showing the filter membrane cartridge;
Fig.6 is a vertical sectional view showing a membrane separation system according to a second embodiment of the invention contained in a treatment tank;
Fig.7 is a plan view showing membrane separation systems according to a third embodiment of the invention contained in a treatment tank containing the separation systems therein;
Fig.8 is a vertical sectional view showing the membrane separation system and the treatment tank shown in Fig.7;
Fig.9 is a plan view showing membrane separation systems according to a fourth embodiment of the invention contained in a treatment tank;
Fig.10 is a vertical sectional view showing the membrane separation system and the treatment tank shown in Fig.9;
Fig.11 is a plan view showing a parallel arrangement of the treatment tanks resemblant to those shown in Figs.7 and 8;
Fig.12 is a perspective view showing a conventional membrane separation system;
Fig.13 is a plan view showing a treatment tank wherein the membrane separation systems of Fig.12 are disposed in parallel; and
Fig.14 is a plan view showing a treatment tank wherein the membrane separation systems of Fig.12 are disposed in parallel and in plural lines.

### DESCRIPTION OF PREFERRED EMBODIMENTS

Now, preferred embodiments of the invention will hereinbelow be described with reference to the accompanying drawings.

### Embodiment 1

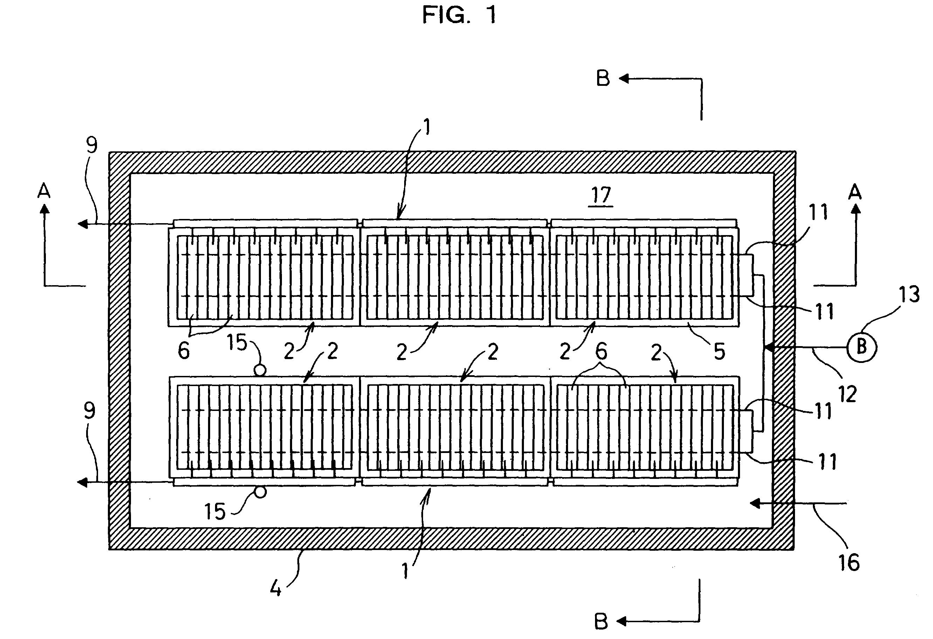

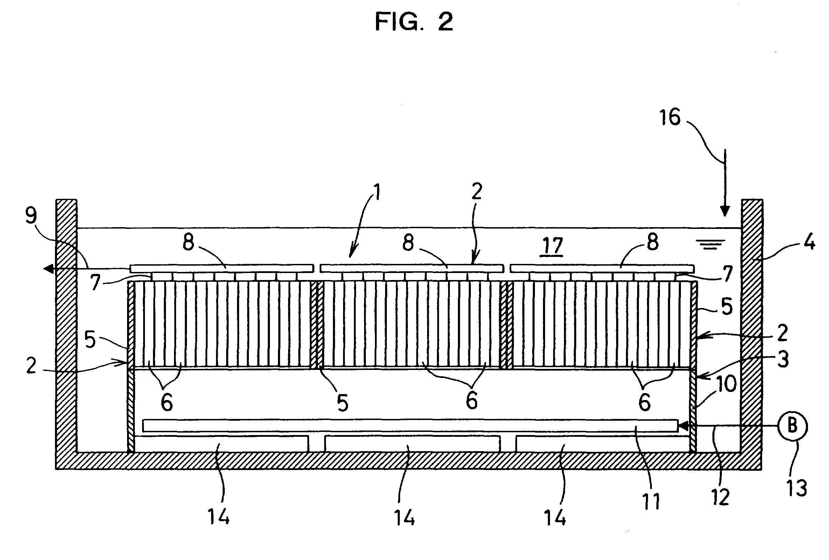

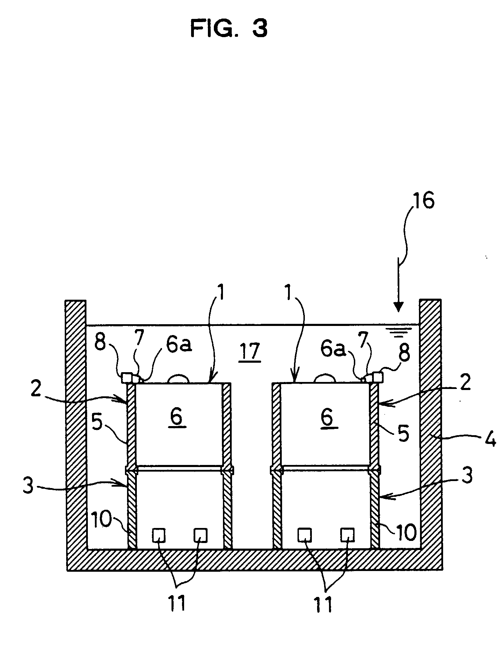

As shown in Figs.1 to 3, a membrane separation system 1 includes three filter membrane modules 2 arranged in series, and one diffuser set 3 bearing these filter membrane modules 2 thereon. Two such membrane separation systems 1 are laid in an elongate, channel like treatment tank 4 for the activated sludge process, in parallel with each other, in a longitudinal direction across opposite ends of the tank 4.

Each of the filter membrane modules 2 includes a box-frame shaped cartridge case 5 with its top and bottom open, and plate-like filter membrane cartridges 6 arranged in parallel in the cartridge case 5. Adjacent filter membrane modules 2 are in close contact with each other on their respective outside surfaces.

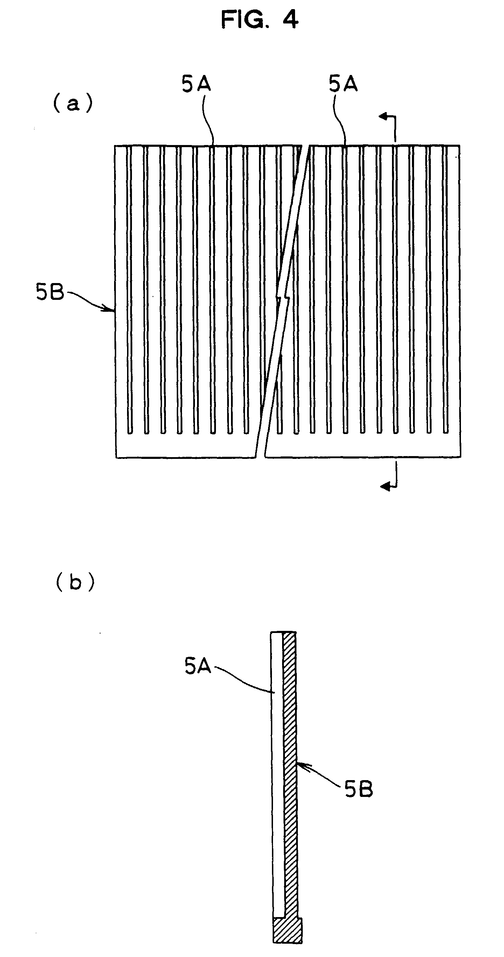

The cartridge case 5 includes a pair of slit panels 5B disposed in opposing relation, the opposing surfaces of the slit panels having vertical slits 5A as shown in Figs.4a and 4b. The slits 5A are closed at their lower ends.

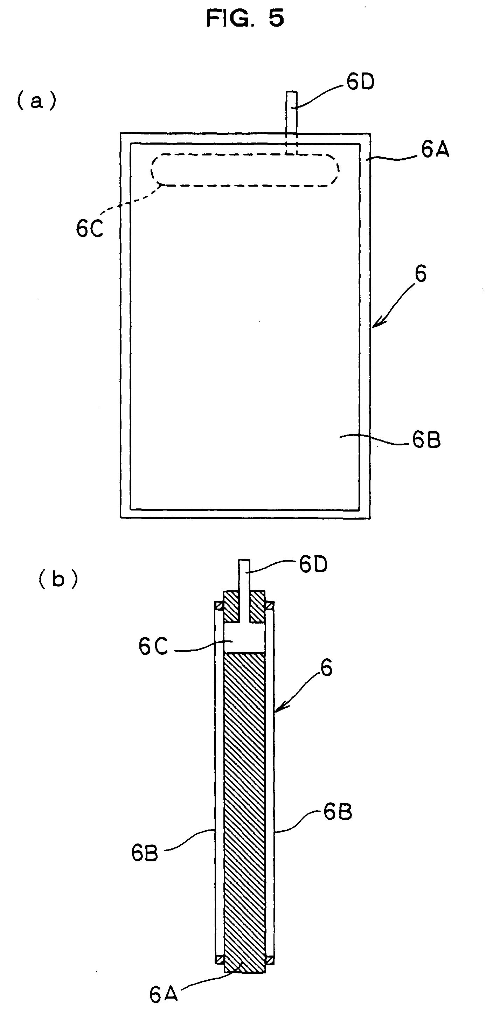

As shown in Figs.5a and 5b, the filter membrane cartridge 6 includes a rigid supporting plate 6A such as formed of an ABS resin, filter membranes 6B of organic materials such as polyolefin resin, each integrally formed with spacer sheet, covering each surfaces of the supporting plate 6A, a filtrate path 6C formed in the supporting plate 6A, and a nozzle 6D communicating with the filtrate path 6C and accordingly spaces between the supporting plate 6A and the filter membrane 6B.

The filter membrane cartridges 6 are arranged in vertical orientation with the filter membranes 6B, sequentially in the longitudinal direction of the treatment tank 4, and in parallel relation at constant intervals by inserting lateral edges of the filter membrane cartridges 6 in the slits 5A of the cartridge case 5 (normally, a gap between opposing filter membranes 6B of adjacent cartridges is 6 to 12 mm).

The nozzle 6D of each filter membrane cartridge 6 is connected, via a tube 7, to a collector pipe 8 fixed to the upper end of the cartridge case 5. To the collector pipes 8 is connected a filtrate conduit 9. The other end of the conduit 9 is led out of the treatment tank 4 into another treatment tank (not shown) and opens under atmosphere.

The diffuser set 3 includes a box-frame shaped diffuser case 10 with its top and bottom open and a plurality of aeration diffusers 11 (two diffuser pipes herein) laid within the diffuser case 10 at suitable intervals from each other. Both of them are disposed in the longitudinal direction of the treatment tank 4. Each of the aeration diffusers 11 is connected to an air supply, such as a blower 13 or a compressor disposed externally of the treatment tank 4, via an air conduit 12. Formed at the bottom of the diffuser case 10 are openings 14 through which a mixture to be filtered flows.

The upper end surface of the diffuser case 10 and the lower end surfaces of the cartridge cases 5 are in abutment relation so that the top opening of the diffuser case 10 is positively covered by the three filter membrane modules 2.

A pair of guide rails 15 stand upright on opposite sides of each filter membrane module for guiding its vertical movement. (For simplicity of illustration, Fig.1 depicts only a pair of the guide rails 15 in conjunction with the lower left filter membrane module 2.)

The following procedure is taken to install the membrane separation systems 1 in the treatment tank 4. Each diffuser case 10 is set to place with its longitudinal sides extended parallel to the longitudinal direction of the tank 4 and spaced from adjoining diffuser case 10 and from the side walls of tank 4. The aeration diffusers 11 are horizontally laid inside of the diffuser case 10 and the aeration diffusers 11 thus installed are connected to the blower 13 via the air conduit 12.

Subsequently, each filter membrane module 2 is lowered as guided by the guide rails 15 thereby to mount the module on the top surface of the diffuser case 10. Thereafter, each collector pipe 8 is connected to the filtrate conduit 9. In the gravity filtration systems, the opening of the filtrate conduit 9 is positioned somewhat higher than the upper ends of the filter membrane cartridges 6 in order to prevent exposure of the filter membranes 6B.

Then, a raw water is introduced into the treatment tank 4 through a supply pipe 16 at an end of the longitudinal side of the treatment tank 4 while an activated sludge is added to the raw water so that the membrane separation systems 1 are immersed in an resulting mixture 17.

Subsequently, an activated sludge process and a filtration of the mixture 17 are carried out. That is, the aerated bubbles from the aeration diffusers 11 and a resultant upward flow of the mixture 17 are guided upward to the filter membrane modules 2 by the diffuser case 10 thereby to cause the mixture 17 to flow through the gaps between the filter membrane cartridges 6.

Thus, the mixture 17 is subject to a cross-flow filtration, and resulting filtrate is taken out through filter path 6C, nozzle 6D, tube 7, collector pipe 8, filtrate conduit 9 sequentially, to the tank outside, while the surfaces of the filter membranes 6B of the filter membrane cartridges 6 are cleaned by the above gas-liquid mixed flow.

Accordingly, efficient filtration of the mixture 17 is ensured. In addition, the mixture 17 is allowed to flow longitudinally of the tank without being blocked by the membrane separation systems 1, thereby ensuring smooth biological treatment and filtration processes.

And at suitable time intervals, the maintenance/inspection is performed. At that time, an operator may expose the maintenance passage in the longitudinal direction of the treatment tank 4 by lowering the level of the mixture 17, and then move on the passage to inspect each filter membrane cartridges 6, and then remove/reset any one of them if cleaning or repair thereof is required.

Thus, the membrane separation system 1 of the invention permits the maintenance/inspection of the filter membrane cartridges 6 on a cartridge-by-cartridge basis without additional tools unlike the conventional membrane separation system.

This eliminates the limitation on the size of the filter membrane module 2 (relating to the number of filter membrane cartridges 6) as well as space for removing/resetting the filter membrane module 2. As a result, the number of filter membrane cartridges 6 (accordingly an area of filter membrane 6B) per footprint of the system increases.

Further, as the size of the filter membrane module 2 (accordingly the number of filter membrane cartridges 6) arranged in line increases, the number of components including the filtrate conduit 9, the aeration diffusers 11, and the air conduit 12 decrease. This facilitates assembly works on site and also notably reduce the system/construction costs as compared to the conventional membrane separation system described above. Thus, a significant reduction of the installation costs per volume of subject mixture (or per filter membrane cartridge 6) is achieved as compared to the conventional membrane separation systems.

For these reasons, the membrane separation system of the invention may be advantageously applied to the large-scale treatment tanks, more advantageously to the elongate, channel like treatment tanks, like those in the sewage treatment plant.

Further, as this membrane separation system has an arrangement wherein a plurality of filter membrane modules 2 rest upon the diffuser case 10, the filter membrane modules 2 can be configured by suitably selecting a size of the filter membrane cartridge 6 or a number thereof as long as the filter membrane area needed for the treatment tank 4 is ensured.

In addition, the cartridge cases 5 in close contact with each other contribute to an increased strength of the filter membrane modules 2. If the filter membrane module 2 is constructed in an easy-to-carry size, the filter membrane cartridges can be loaded or removed on a filter membrane module basis. This permits the cleaning or repair of the filter membrane cartridges 6 without shutting down of the treatment.

It is to be noted that the filter membrane cartridge 6 is not limited to the above in its material or layout, such as the layout of the filtrate path 6C and the nozzle 6D.

As the cartridge case 5 is designed to support the lateral edges of respective filter membrane cartridges 6 at the slits 5A in their inside surfaces, it can be formed of FRP, SUS, or the like, so as to resist wear due to vibrations of the filter membrane cartridges 6, and particularly, avoid distortion due to the load of the filter membrane cartridges 6 or in conjunction with maintenance/inspection. The slits 5A may be formed only at places corresponding to upper portions and/or lower portions of the filter membrane cartridges 6 by arranging protrusions or projections. Close end portions of the slits 5A for receiving lower edges of the filter membrane cartridges 6 may be formed by placing separate stopper members on the case surface.

The diffuser case 10 is not particularly limited in the material or construction as long as it can avoid distortion by the load of the filter membrane modules 2 or in conjunction with the maintenance/inspection work. The diffuser case 10 may be formed of SUS or concrete construction, alternatively, integrally constructed with the treatment tank 4 by the civil engineering works.

The diffuser set 3 may be formed as a unit in which the aeration diffusers 11 are fixed to place within the diffuser case 10, but unit-made diffuser set must be adjusted to horizontal position in order that the aeration diffusers 11 are laid in horizontal position for uniform aeration within the diffuser case 10. In contrast, the diffuser set not unifying the diffuser case 10 and the aeration diffusers 11 facilitates the adjustment work because only the aeration diffusers 11 need to be adjusted.

### Embodiment 2

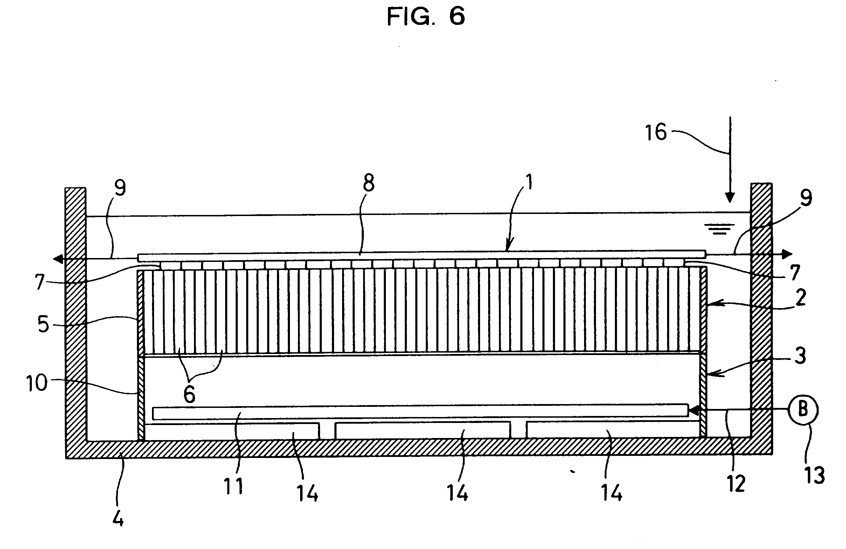

In a membrane separation system 1 shown in Fig.6, a single filter membrane module 2 is mounted upon a single diffuser case 10. This arrangement provides the same merits as those of the first embodiment hereof.

### Embodiment 3

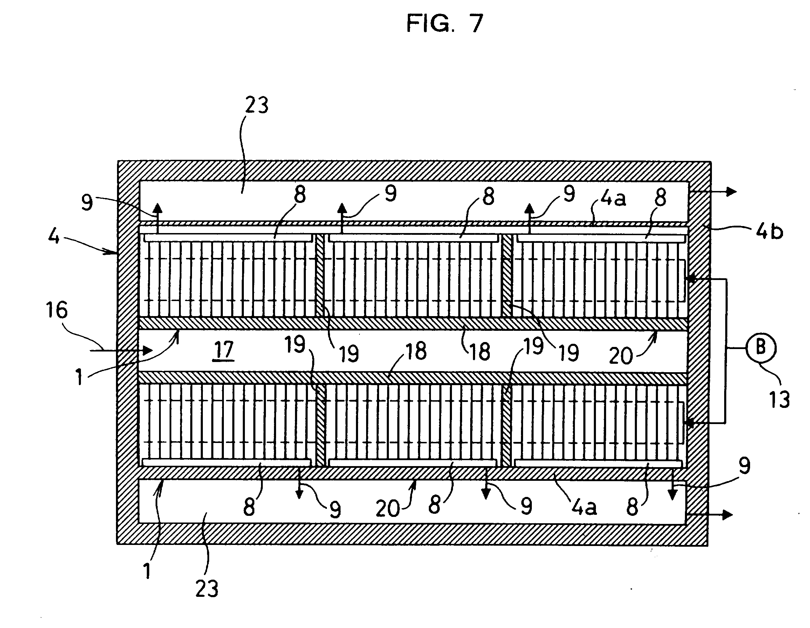

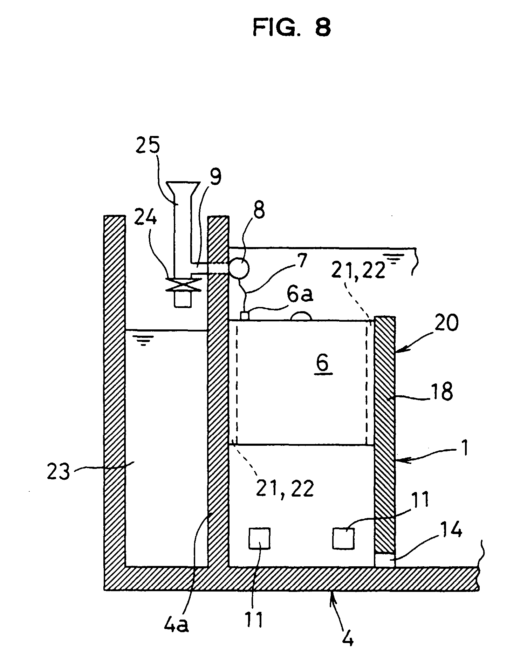

In a membrane separation system 1 shown in Figs.7 and 8, a wall 18 of a predetermined height stands upright and extends in parallel to a longitudinal tank wall 4a while reinforcing walls 19 stand at suitable intervals for interconnecting the tank wall 4a and the wall 18. The diffuser case 20 is defined by the longitudinal tank wall 4a, a lateral tank wall 4b, the wall 18 and the reinforcing wall 19.

Slit panels 22 with slits 21 resemblant to those shown in Fig.4 are fixed to opposing inside surfaces of the tank wall 4a and the wall 18. The wall 18 has opening 14 at its lower portion, through which the mixture to be filtered flows. The collector pipes 8 are laid across each section defined by the reinforcing wall(s) 19 and fixed to the tank wall 4a, respectively. The filtrate conduit 9 communicated with the collector pipe 8 extends through the tank wall 4a and opens in a treatment tank 23 adjacent to the treatment tank 4. The filtrate conduit 9 has a valve assembly 24 interposed therein and is also provided with a stand pipe 25 for feeding a cleaning agent, such as soda hypochlorite, to the filter membrane cartridge 6, the filtrate path 6C.

Such a diffuser case 20 is so robust that the load of the filter membrane cartridges 6 applied thereto via the slit panels 22 does not cause the distortion of the case 20. This ensures very smooth loading or removal of the filter membrane cartridges 6. The operator can perform the maintenance/inspection work standing on the wall 18 and/or the maintenance passage.

### Embodiment 4

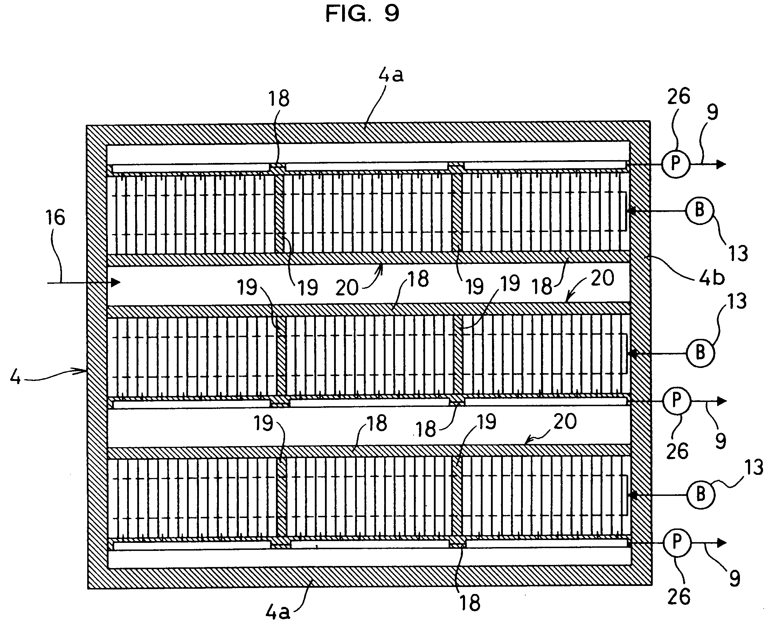

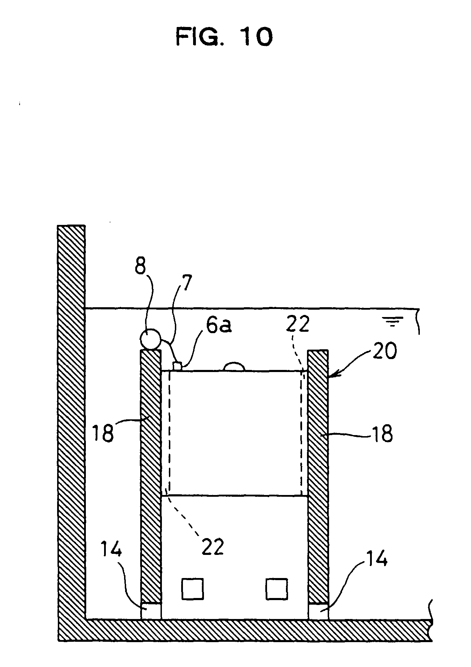

In a membrane separation system 1 shown in Figs.9 and 10, three pairs of the wall 18 extend in parallel to the longitudinal tank walls 4a, each pair of walls 18 defining a predetermined space therebetween and the reinforcing walls 19 for interconnecting the walls 18 stand at suitable intervals. Thereby, diffuser cases 20 are each defined by the lateral tank wall 4b, the walls 18.

The slit panels 22 as mentioned above are secured at the opposing surfaces of the wall 18. The opening 14 through which the mixture flows is formed at the bottom of each wall 18. The collector pipes 8 are laid across each section defined by the reinforcing wall(s) 19, and connected in series and fixed to one of the wall 18. Externally of the treatment tank 4, a suction pump 26 is interposed in the filtrate conduit 9 communicating with the collector pipe 8 at one end of the wall.

Such a membrane separation system 1 also provides the same effects as the membrane separation system of the third embodiment.

### Embodiment 5

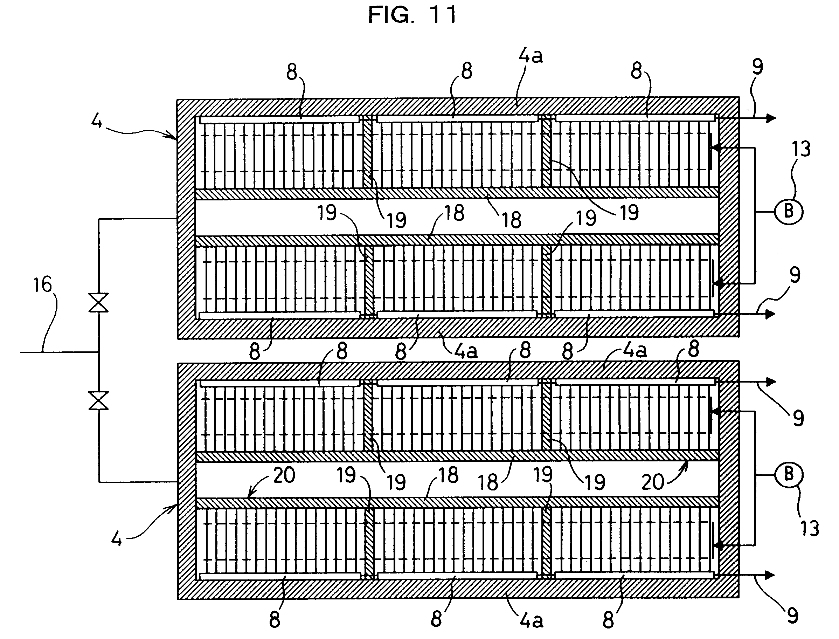

Fig.11 shows two treatment tanks 4 arranged in parallel, each tank containing therein two membrane separation systems 1 disposed in parallel. The parallel arrangement of the treatment tanks 4 allows the maintenance/inspection of the membrane separation systems 1 on a treatment tank 4 basis, thereby avoiding the suspension of the whole treatment.

It is to be noted that the membrane separation systems 1 according to the embodiments hereof are operable as the gravity filtration system and also as the suction filtration system using suction pump interposed in the filtrate conduit 9. The detergent cleaning means shown in conjunction with the embodiment 3 is normally provided in the membrane separation systems of the other embodiments, as well.

## Claims

1. A membrane separation system laid to be immersed in a mixture to be filtered in a treatment tank comprising:
one or more filter membrane module (s) disposed in a longitudinal direction of the treatment tank;
one or more aeration diffuser (s) disposed below the filter membrane module(s); and
a diffuser case with its upper and bottom open, containing the aeration diffuser(s) and bearing the filter membrane module(s) to guide aerated bubbles from the aeration diffuser(s) upward to the filter membrane module(s),
each of the filter membrane module having plate-like filter membrane cartridges, and the filter membrane cartridges each having its supporting plate surfaces covered with filter membranes of organic materials and arranged in vertical orientation with the filter membranes, in parallel and spaced relation, sequentially in the longitudinal direction of the treatment tank,
upper end portions of the filter membrane cartridges ranging in the longitudinal direction of the treatment tank to define a maintenance passage for the filter membrane cartridges themselves.

2. A membrane separation system as set forth in Claim 1 wherein the filter membrane module comprises a cartridge case having vertical slits on its inside surfaces for receiving the lateral edges of the filter membrane cartridges, and is disposed singly or in plural numbers to cover the upper opening of the diffuser case.

3. A membrane separation system as set forth in Claim 1 wherein the filter membrane module comprises a pair of cartridge supporting panels fixed on upper inside surfaces of the diffuser case in opposing relation, and each of the cartridge supporting panel having vertical slits on its surfaces for receiving the lateral edges of the filter membrane cartridges.

4. A membrane separation system as set forth in Claim 1 wherein at least a part of the diffuser case is integrally constructed with the treatment tank in civil engineering fashion.
